# EUROPÄISCHE PATENTSCHRIFT

(11) **EP 2 611 643 B1**
(45) Veröffentlichungstag und Bekanntmachung des Hinweises auf die Patenterteilung: **18.12.2019**
(21) Anmeldenummer: 11755298.4
(22) Anmeldetag: 31.08.2011
(51) Int. Cl.: B60L 9/00

(54) **ELEKTRISCHE ENERGIEVERSORGUNGSANORDNUNG FÜR ANTRIEBSEINRICHTUNGEN VON SCHIENENFAHRZEUGEN**
ELECTRICAL POWER SUPPLY ASSEMBLY FOR DRIVE UNITS OF RAIL VEHICLES
SYSTÈME D'ALIMENTATION EN ÉNERGIE ÉLECTRIQUE DESTINÉ À DES DISPOSITIFS D'ENTRAÎNEMENT DE VÉHICULES FERROVIAIRES

(30) Priorität: 03.09.2010 DE 102010044322
(43) Veröffentlichungstag der Anmeldung: 10.07.2013
(73) Patentinhaber: Bombardier Transportation GmbH, 10785 Berlin (DE)
(72) Erfinder: REINOLD, Harry, 76831 Ilbesheim (DE); LINDENMÜLLER, Lars, 01127 Dresden (DE)
(74) Vertreter: Brunotte, Joachim Wilhelm Eberhard
(86) Internationale Anmeldenummer: PCT/EP2011/064975
(87) Internationale Veröffentlichungsnummer: WO 2012/028640

(56) Entgegenhaltungen:
- EP-A1- 1 052 136
- DE-A1- 19 630 284
- DE-A1-102004 006 753
- MEYER M: "AKTIVE STOERSTROMFILTER FUER DIE NETZSEITE VON UMRICHTERLOKOMOTIVEN", ELEKTRISCHE BAHNEN, OLDENBOURG INDUSTRIEVERLAG, MUNCHEN, DE, Bd. 91, Nr. 3, 1. März 1993 (1993-03-01), Seiten 80-84,86, XP000363201, ISSN: 0013-5437
- CASCONE V ET AL: "Design of active filters for dynamic damping of harmonic currents generated by asynchronous drives in modern high power locomotives", PROCEEDINGS OF THE ANNUAL POWER ELECTRONICS SPECIALISTS CONFERENCE (PESC). TOLEDO, JUNE 29 - JULY 3, 1992; [PROCEEDINGS OF THE ANNUAL POWER ELECTRONICS SPECIALISTS CONFERENCE (PESC)], NEW YORK, IEEE, US, Bd. CONF. 23, 29. Juni 1992 (1992-06-29), Seiten 404-410, XP010064887, DOI: 10.1109/PESC.1992.254852 ISBN: 978-0-7803-0695-0

## Beschreibung

Die Erfindung betrifft eine elektrische Energieversorgungsanordnung für Antriebseinrichtungen von Schienenfahrzeugen und ein Verfahren zum Betreiben einer Antriebseinrichtung eines Schienenfahrzeugs.

Für die Versorgung von Antriebseinrichtungen von Schienenfahrzeugen werden je nach Land oder Region elektrische Versorgungsnetze in unterschiedlicher Weise betrieben. Realisiert ist z. B. in Deutschland eine elektrische Versorgung mit Wechselspannung bei einer Frequenz von 16,7 Hz und einer Nennspannung von 15 kV. Ein anderes System wird bei Wechselspannung mit 50 Hz und einer Nennspannung von 25 kV betrieben. Auch existieren Gleichspannungssysteme, insbesondere bei 3 kV und 1,5 kV Nennspannung.

Für den Betrieb an Wechselspannungs-Versorgungsnetzen ist es üblich, die vergleichsweise hohe Wechselspannung des Versorgungsnetzes zunächst über einen Eingangstransformator des Schienenfahrzeugs auf einen niedrigeren Wechselspannungswert herunter zu transformieren, die herunter transformierte Wechselspannung gleichzurichten und in einen so genannten GleichspannungsZwischenkreis einzuspeisen, an dem ein Traktionswechselrichter für den Betrieb eines Traktionsmotors oder mehrerer Traktionsmotoren angeschlossen ist. Nachteilig an dieser Lösung ist aber die Größe und das Gewicht des Eingangstransformators, insbesondere bei Frequenzen von 16,7 Hz, aber auch noch bei Frequenzen von 50 Hz.

Wenn ein Schienentriebfahrzeug an einem Gleichspannungs-Versorgungsnetz betrieben werden soll, wird der Gleichspannungszwischenkreis über eine Induktivität direkt an das Versorgungsnetz angeschlossen. Die Induktivität dient als passiver Filter der Vermeidung bzw. Dämpfung von Störungen, die vom Versorgungsnetz auf die Schiene übertragen werden könnten. Aufgrund der starken Schwankungen der Spannung des Gleichspannungs-Versorgungsnetzes, die vor allem beim Betrieb von mehreren Schienenfahrzeugen im gleichen Netzabschnitt auftreten können, werden große Induktivitätswerte für die Eingangsinduktivität benötigt. Da auch große elektrische Ströme über die Eingangsinduktivität fließen, handelt es sich bei der Eingangsinduktivität üblicherweise um ein sehr großes und daher auch schweres Bauteil.

Eine weitere Funktion der Eingangsinduktivität besteht darin, Rückwirkungen des Betriebes des Traktionswechselrichters auf das Gleichspannungs-Versorgungsnetz zu reduzieren.

Es sind bereits aktive Filter für den Betrieb an Gleichspannungs-Versorgungsnetzen vorgeschlagen worden, die Wechselspannungen und damit Wechselströme erzeugen, welche die beim Betrieb des Traktionswechselrichters erzeugten Störströme kompensieren. Ein Beispiel für aktive Filter offenbart Cascone, V. et al. "Design of active filters for dynamic damping of harmonic currents generated by asynchronous drives in modern high power locomotives", Power Electronics Specialists Conference, 1992. Durch den Einsatz des aktiven Filters kann die Größe und damit das Gewicht der Eingangsinduktivität verringert werden.

Um den Verkehr in verschiedenen Schienenverkehrsnetzen zu erleichtern, sind teilweise dieselben Schienentriebfahrzeuge (z. B. Lokomotiven oder Triebköpfe) für den Betrieb an den unterschiedlichen elektrischen Versorgungsnetzen ausgestattet. Um Gewicht zu sparen, wird dabei z. B. eine Wicklung des Eingangstransformators als Eingangsinduktivität verwendet, wenn das Fahrzeug an einem Gleichspannungsnetz betrieben wird. Damit kann zwar verhindert werden, dass das Gewicht aufgrund einer zusätzlichen Eingangsinduktivität zunimmt. Jedoch ist der sehr schwere und große Eingangstransformator weiterhin erforderlich. Der Einsatz aktiver Filter reduziert das Gewicht nicht.

DE 196 30 284 A1 beschreibt ein Antriebssystem für ein Schienenfahrzeug, bestehend aus zwei über mindestens einen Transformator gekoppelten Teilsystemen, wobei in jedem der beiden Teilsysteme mindestens ein Vierquadrantensteller, mindestens ein Zwischenkreiskondensator und mindestens ein Wechselrichter angeordnet sind. Es wird ein Antriebskonzept für ein Schienenfahrzeug mit mehreren netzseitig seriengeschalteten Teilstromrichtersystemen dargestellt. Jedes dieser Teilstromrichtersysteme ist über einen separaten Schalter überbrückbar. Zwischen dem Fahrdraht/Stromabnehmer-System und dem ersten Teilstromrichtersystem ist eine Haupteingangsdrossel vorgesehen, welche u.a. zur Überspannungsbegrenzung dient. Die Ausgänge der Teilstromrichtersysteme liegen parallel. Durch das Antriebskonzept wird die relativ hohe Wechselspannung zwischen Fahrdraht/Stromabnehmer-System und Rad/Schiene-System entsprechend der Anzahl der Teilstromrichtersysteme aufgeteilt, sodass jeder Vierquadrantensteller bzw. Wechselrichter der ersten Teilsysteme der Teilstromrichtersysteme mit Halbleiterschaltern betreibbar ist. Ein Teilstromrichtersystem enthält beispielsweise ein Eingangsdrosselsystem, einen Vierquadrantensteller, einen Zwischenkreiskondensator, einen Wechselrichter und einen Transformator. Sekundärseitig des Transformators können in jedem Teilstromrichtersystem zusätzlich ein Vierquadrantensteller und ein Zwischenkreiskondensator vorgesehen sein. An die parallel geschalteten Ausgänge der Teilstromrichtersysteme können Wechselrichter zur Versorgung jeweils eines Antriebsmotors parallel zueinander angeschlossen sein.

Aus der Veröffentlichung von Markus Meyer: "Aktive Störstromfilter für die Netzseite von Umrichterlokomotiven" in EB elektrische Bahnen, Band 91, Nr. 3, März 1993, Seiten 80-84 sowie 86, ist der Einsatz von aktiven Netzfiltern auf Umrichterlokomotiven bekannt, die die vom Traktionsstromrichter erzeugten Stromharmonischen weitgehend vom Leitungsnetz fernhalten. Im Gegensatz zu passiven Filtern fließen dabei auch bei verzerrtem Netz keine zusätzlichen unerwünschten Ströme. Eine Lokomotive mit Aktivfilter kann so optimiert werden, dass sie weniger Verluste erzeugt als eine Lokomotive ohne oder mit passivem Filter. Die Veröffentlichung gibt eine kurze Übersicht über den Aufbau und die Wirkungsweise von aktiven Störstromfiltern.

V. Cascone et al.: "Design of acitve filters for dynamic damping of harmonic currents generated by asynchronous drives in modern high power locomotives", Proceedings of the annual power Electronics Specialists Conference (PESC), Tolede, june 29 -july 3, 1992; New York, IEEE, US, Bd. Conf. 23, 29, Juni 1992 (1992-06-29), Seiten 404-410, ISBN: 978-0-7803-0695-0, beschreiben die Reduktion des harmonischen Inhalts von Strömen, die in Oberleitungen injiziert werden. Bei der Minimierung der elektromagnetischen Interferenzen mit dem Signalisierungssystem führt die Verwendung von einem aktiven Filter zu bemerkenswerten Vorteilen. Es wird ein zuverlässiges aktives Filter-Design analysiert und auch eine Hochleistungs-, Hochgeschwindigkeits-Lokomotive für die staatlichen italienischen Bahnen angewendet.

Es ist eine Aufgabe der vorliegenden Erfindung, eine elektrische Energieversorgungsanordnung für Antriebseinrichtungen von Schienenfahrzeugen anzugeben, die den Betrieb an Gleichspannungs- und Wechselspannungsnetzen erlaubt und mit geringem Gewicht realisiert werden kann. Es ist eine weitere Aufgabe der vorliegenden Erfindung ein entsprechendes Verfahren zum Betreiben einer Antriebseinrichtung eines Schienenfahrzeugs anzugeben.

Ein Grundgedanke der vorliegenden Erfindung besteht darin, eine Gleichrichteranordnung für den Betrieb an Wechselspannungsnetzen während des Betriebes an Gleichspannungsnetzen als aktiven Filter zu betreiben. Diese Gleichrichteranordnung weist insbesondere zumindest einen ersten Gleichrichter auf, der ohne galvanische Trennung an das Wechselspannungsnetz angeschlossen wird. Die von dem ersten Gleichrichter erzeugte Gleichspannung wird zu einer Wechselspannung mit höherer Frequenz (insbesondere im Mittelfrequenzbereich von 8 bis 20 kHz) umgerichtet, die Wechselspannung wird der Primärseite eines Transformators zugeführt und die an der Sekundärseite des Transformators anliegende Sekundär-Wechselspannung wird durch einen zweiten Gleichrichter wieder gleichgerichtet und liegt am Gleichspannungszwischenkreis an, aus dem üblicherweise zumindest ein Traktionswechselrichter für den oder die Fahrmotoren des Schienenfahrzeugs gespeist wird/werden.

Das Prinzip und Varianten einer solchen Gleichrichteranordnung für den Betrieb an Wechselspannungsnetzen sind z. B. in der DE 196 30 284 A1 beschrieben. Eine Variante besteht insbesondere darin, dass mehrere Module, die jeweils einen netzseitigen ersten Gleichrichter, zumindest einen Wechselrichter, zumindest einen Transformator und zumindest einen zweiten Gleichrichter aufweisen, vorhanden sind. Dabei sind netzseitige, erste Gleichrichter in Reihe geschaltet, während die über den Gleichspannungszwischenkreis an den zumindest einen Traktionswechselrichter angeschlossenen zweiten Gleichrichter parallel geschaltet sind. Dadurch können die netzseitigen ersten Gleichrichter an eine hohe Wechselspannung des Versorgungsnetzes angeschlossen werden und liefern dennoch die gewünschte niedrigere Gleichspannung für den Gleichspannungszwischenkreis.

Ein wesentlicher Vorteil einer solchen an sich bekannten Energieversorgungsanordnung ist das wesentlich geringere Gewicht. Es wird kein Transformator für niedrige Frequenzen benötigt, bei denen die Wechselspannungsnetze betrieben werden. Vielmehr wird der Transformator oder die Transformatoren der Anordnung bei einer wesentlich höheren Frequenz betrieben, die vorzugsweise im Mittelfrequenzbereich in der Größenordnung von 10 kHz liegt. Solche Transformatoren können bei erheblich kleineren Bauvolumina und damit erheblich geringeren Gewichten gebaut werden. Das zusätzliche Gewicht für die verschiedenen Gleichrichter und Wechselrichter ist im Verhältnis zu der erzielten Gewichtsersparnis gering.

Wenn nun der netzseitige Gleichrichter oder die netzseitigen Gleichrichter der Anordnung beim Betrieb des Schienenfahrzeugs an einem Gleichspannungsnetz als aktive Filter betrieben werden, kann außerdem der Eingangsfilter (oben spezieller als die Eingangsinduktivität bezeichnet) der Gleichspannungsanschlussleitung, der den Gleichspannungszwischenkreis mit dem Gleichspannungsnetz verbindet, als wesentlich kleineres und damit leichteres elektrisches Bauteil oder Anordnung von Bauteilen realisiert werden. Außerdem ist keine zusätzliche Einrichtung für die Realisierung des aktiven Filters erforderlich.

Wenn mehrere der genannten Module vorhanden sind, so dass mehrere netzseitige, erste Gleichrichter in Serie geschaltet sind, bietet der aktive Filter besonders vorteilhafte Möglichkeiten der Erzeugung von Wechselspannungen. Prinzipiell sind mehr verschiedene Spannungsniveaus erzeugbar als bei einem einzigen netzseitigen Gleichrichter. Es soll angemerkt werden, dass die netzseitigen Gleichrichter beim Betrieb als aktiver Filter umgekehrt als Wechselrichter betrieben werden.

Auch kann der aktive Filter Spannungen bei höheren Frequenzen erzeugen und/oder bei geringeren Schaltverlusten als es bei Verwendung eines einzelnen Gleichrichters der Fall wäre. Die Anordnung mit mehreren der Module ist daher besonders gut geeignet, Störsignale zu kompensieren.

Vorzugsweise werden für den oder die netzseitigen, ersten Gleichrichter Halbleiterschalter, insbesondere IGBTs (Insulated Gate Bipolar Transistors), eingesetzt. Bei dem Gleichrichter oder den Gleichrichtern kann es sich insbesondere um so genannte Vierquadrantensteller handeln. Auch die zwischenkreisseitigen, zweiten Gleichrichter können Vierquadrantensteller sein. In jedem Fall wird es bevorzugt, dass der oder die Wechselrichter und der oder die Gleichrichter, die galvanisch durch den Transformator voneinander getrennt sind und an dem Transformator oder den Transformatoren angeschlossen sind, ebenfalls Konverter sind, die durch Schalten von Halbleiterschaltern (insbesondere IGBTs) betrieben werden.

Insbesondere wird Folgendes vorgeschlagen: Eine elektrische Energieversorgungsanordnung für Antriebseinrichtungen von Schienenfahrzeugen, wobei die Energieversorgungsanordnung aufweist:
- einen ersten elektrischen Anschluss zum Anschließen der Anordnung an ein elektrisches Energieversorgungsnetz,
- einen zweiten elektrischen Anschluss zum Anschließen der Anordnung an einen Gleichspannungszwischenkreis, an den wiederum zumindest ein Traktionswechselrichter zum Betreiben zumindest eines Fahrmotors anschließbar ist,
- eine Gleichrichteranordnung zum Betrieb des Schienenfahrzeugs an einem Wechselspannungsnetz, wobei die Gleichrichteranordnung über einen ersten Filter mit dem ersten elektrischen Anschluss verbunden ist und zumindest ein Modul aufweist, in dem ein erster Gleichrichter über einen Wechselrichter und einen Transformator mit einem zweiten Gleichrichter verbunden ist, wobei der erste Gleichrichter an seiner Wechselspannungsseite den ersten Filter mit dem ersten elektrischen Anschluss verbunden ist, wobei der zweite Gleichrichter an seiner Gleichspannungsseite mit dem zweiten elektrischen Anschluss verbunden ist und wobei im Fall von mehreren der Module die Wechselspannungsanschlüsse der ersten Gleichrichter in Serie geschaltet sind, aber die Gleichspannungsanschlüsse der zweiten Gleichrichter parallel geschaltet sind,
- eine elektrische Verbindung zum Betrieb des Schienenfahrzeugs an einem Gleichspannungsnetz, wobei die elektrische Verbindung einen zweiten Filter aufweist und wobei die elektrische Verbindung den ersten elektrischen Anschluss mit dem zweiten elektrischen Anschluss verbindet,
- eine Steuereinrichtung zum Steuern des Betriebes des ersten Gleichrichters oder der ersten Gleichrichter, während das Schienenfahrzeug an einem Gleichspannungsnetz betrieben wird, wobei die Steuereinrichtung ausgestaltet ist, durch Steuern von Schaltzeitpunkten von Halbleiterschaltern des ersten Gleichrichters oder der ersten Gleichrichter an dem ersten elektrischen Anschluss eine Wechselspannung zu erzeugen, die einen elektrischen Wechselstrom, der ein Störstrom ist, der aufgrund des Betriebes der Antriebseinrichtung des Schienenfahrzeugs von dem Gleichspannungszwischenkreis durch die elektrische Verbindung fließt, kompensiert oder auf ein zulässiges Maß reduziert.

Ferner wird ein Verfahren zum Betreiben einer Antriebseinrichtung eines Schienenfahrzeugs vorgeschlagen, wobei
- beim Betrieb des Schienenfahrzeugs an einem Wechselspannungsnetz Energie aus dem Wechselspannungsnetz über eine Gleichrichteranordnung in einen Gleichspannungszwischenkreis gespeist wird, an den zumindest ein Traktionswechselrichter zum Betreiben zumindest eines Fahrmotors angeschlossen ist, wobei die Energie aus dem Wechselspannungsnetz über einen ersten Filter in die Gleichrichteranordnung eingebracht wird und über zumindest ein Modul der Gleichrichteranordnung zu dem Gleichspannungszwischenkreis übertragen wird, wobei die Energie in jedem Modul von einem ersten Gleichrichter über einen Wechselrichter und einen Transformator zu einem zweiten Gleichrichter übertragen wird, der die Energie in den Gleichspannungszwischenkreis einspeist, wobei im Fall von mehreren der Module die Wechselspannungsanschlüsse der ersten Gleichrichter in Serie geschaltet sind, aber die Gleichspannungsanschlüsse der zweiten Gleichrichter parallel geschaltet sind,
- beim Betrieb des Schienenfahrzeugs an einem Gleichspannungsnetz Energie aus dem Gleichspannungsnetz über eine elektrische Verbindung in den Gleichspannungszwischenkreis eingespeist wird, wobei die elektrische Verbindung einen zweiten Filter aufweist und wobei durch Steuern von Schaltzeitpunkten von Halbleiterschaltern des ersten Gleichrichters oder der ersten Gleichrichter eine Wechselspannung erzeugt wird, die einen elektrischen Wechselstrom, der ein Störstrom ist, der aufgrund des Betriebes der Antriebseinrichtung des Schienenfahrzeugs von dem Gleichspannungszwischenkreis durch die elektrische Verbindung fließt, kompensiert oder auf ein zulässiges Maß reduziert. Insbesondere können auch mehrere Gleichspannungszwischenkreise vorhanden sein, an die jeweils zumindest ein Traktionswechselrichter anschließbar oder angeschlossen ist.

Entsprechend wie in der DE 196 30 284 A1 beschrieben ist unter der Formulierung, dass "die Energie in jedem Modul von einem ersten Gleichrichter über einen Wechselrichter und einen Transformator zu einem zweiten Gleichrichter übertragen wird", auch zu verstehen, dass in dem Modul mehr als ein Wechselrichter und/oder mehr als ein Transformator und/oder mehr als ein zweiter Gleichrichter vorhanden sind und/oder dass verschiedene Module gemeinsam einen Wechselrichter und/oder einen Transformator und/oder einen zweiten Gleichrichter nutzen. Jedes Modul besitzt jedoch einen einzigen ersten Wechselrichter.

Bei dem ersten und/oder zweiten Filter handelt es sich um passive (nicht gesteuerte) Filter, vorzugsweise mit einer Filter-Induktivität. Unter einer Filter-Induktivität wird eine Induktivität verstanden, die zum Zweck der Reduzierung oder Eliminierung von Störsignalen vorgesehen ist. Typischerweise wird als Filter-Induktivität eine entsprechende Spule oder Anordnung von Spulen eingesetzt. Der Filter kann allgemeiner formuliert eine Anordnung von passiven (nicht gesteuerten) elektrischen Bauelementen sein, insbesondere mit zumindest einer Filter-Induktivität und/oder anderen elektrischen Bauelementen, wie zumindest einem Kondensator und zumindest einem Widerstand.

Vorzugsweise sind die Module in gleicher Weise realisiert, d. h. weisen die gleichen Bauteile in gleicher Anordnung auf. Dies ist jedoch nicht zwingend erforderlich. Insbesondere um den Betrieb an Wechselspannungsnetzen mit verschiedener Nennspannung zu ermöglichen, können bei Bedarf Module abgeschaltet oder zugeschaltet werden. Bei abgeschalteten Modulen befindet sich der netzseitige, erste Gleichrichter nicht mehr in der Reihenschaltung der Gleichrichter der verschiedenen Module. Auch für den Betrieb als aktiver Filter können einzelne Module hinzugeschaltet oder abgeschaltet werden.

Beim Betrieb an einem Gleichspannungsnetz können insbesondere Störsignale verhältnismäßig niedriger Frequenz bis z. B. 5 kHz durch den aktiven Filter, d. h. durch Betreiben der ersten Gleichrichter als Wechselrichter kompensiert oder zumindest auf ein zulässiges Maß reduziert werden. Der zweite Filter" der Teil der elektrischen Verbindung zwischen Gleichspannungsnetz und Gleichspannungszwischenkreis ist, kann in diesem Fall auf das Filtern höherer Frequenzen ausgelegt sein. Daher kann der zweite Filter kleiner und leichter gebaut sein als in dem Fall, in dem er auch Störströme niedriger Frequenzen kompensieren oder reduzieren muss. Bei einer Anzahl von n Modulen (n ist eine positive ganze Zahl größer als 1) kann der aktive Filter insbesondere einen Wechselstrom als Kompensationsstrom erzeugen, der eine Frequenz bis zu n f_{S} / 2 hat. Dabei ist f_{S} die Schaltfrequenz eines netzseitigen Gleichrichters, z. B. eines Vierquadrantenstellers. Der zweite Filter, d. h. der passive Filter, ist dann für Frequenzen größer als n f_{S} / 2 ausgelegt. Es ist auch möglich, bei einem oder mehreren Bauteilen des zweiten Filters so genannte Stromverdrängungseffekte (Skin-Effekte) für die Filterung zu nutzen. Mit solchen Stromverdrängungseffekten können insbesondere hochfrequente Anteile des Störstroms gefiltert werden.

Gemäß Anspruch 1 weist die Gleichrichteranordnung eine Mehrzahl der Module auf, wobei die Steuereinrichtung so ausgestaltet ist, dass für die Veränderung einer elektrischen Spannung, die zur Kompensation oder Reduzierung des Störstromes erforderlich ist, ein erster Gleichrichter ausgewählt wird (d. h. einer der ersten, netzseitigen Gleichrichter) oder mehr als einer der ersten Gleichrichter ausgewählt wird. Die Steuereinrichtung steuert einen oder mehrere Halbleiterschalter des oder der ausgewählten ersten Gleichrichter, so dass der oder die gesteuerten Halbleiterschalter umgeschaltet werden und so dass die entsprechend veränderte Spannung an der Wechselspannungsseite der ersten Gleichrichter entsteht. Dabei wird die Auswahl abhängig von einer thermischen Belastung der ersten Gleichrichter getroffen, wobei die Belastung aufgrund von Schaltverlusten entsteht. Es wird also nicht immer - soweit für die Erzeugung der gewünschten Spannung überhaupt möglich - derselbe oder dieselben ersten Gleichrichter geschaltet, sondern es werden die thermisch am wenigsten belasteten Gleichrichter geschaltet.

Eine Möglichkeit der Realisierung besteht darin, die Temperatur der Gleichrichter zu messen und den oder die Gleichrichter mit der niedrigsten Temperatur für den Schaltvorgang auszuwählen. Selbstverständlich kann nur ein solcher Gleichrichter überhaupt ausgewählt werden, der für den beabsichtigten Schaltvorgang geeignet ist, d. h. sich in dem Schaltzustand befindet, der durch Umschalten das gewünschte Ergebnis erzielt. Um zusätzlichen Aufwand für Temperaturfühler und deren Auswertung zu vermeiden, wird jedoch vorgeschlagen, dass vorzugsweise für die Veränderung der Spannung ein erster Gleichrichter ausgewählt wird (oder mehrere erste Gleichrichter ausgewählt werden), dessen (deren) Halbleiterschalter bei unmittelbar vorhergehenden Schaltvorgängen nicht geschaltet wurden. Z. B. kann die Steuereinrichtung für jeden ersten Gleichrichter oder für jeden Halbleiterschalter der ersten Gleichrichter den Zeitpunkt des letzten ausgeführten Schaltvorgangs speichern. Es gibt auch andere Möglichkeiten, wie die Historie der Schaltvorgänge abgespeichert werden kann. Z. B. bei jedem ausgeführten Schaltvorgang eine eindeutige Bezeichnung des zugehörigen ersten Gleichrichters in einen Ringspeicher oder Stapelspeicher eingespeichert werden. Beim Einspeichern eines weiteren Schaltvorgangs wird die Position der gespeicherten Werte in dem Ringspeicher oder in dem Stapelspeicher so verändert, dass die eingespeicherten Werte in der Reihenfolge ihrer Speicherung verbleiben, aber der zuletzt eingespeicherte Wert immer die letzte Position einnimmt. Auf diese Weise gibt es immer einen ersten erforderlich ist, prüft die Steuereinrichtung, ob der Halbleiterschalter oder der Gleichrichter, der für den Schaltvorgang in Frage kommt, dem ersten Speicherplatz entspricht. Alternativ kann zunächst der Gleichrichter oder Halbleiterschalter ermittelt werden, der dem in dem ersten Speicherplatz gespeicherten Wert entspricht. Ist dieser Halbleiterschalter oder Gleichrichter geeignet, die gewünschte veränderte Spannung zu erzeugen, wird er geschaltet. Anderenfalls kann auf den nächsten Speicherplatz in der Reihenfolge der Speicherplätze zugegriffen werden usw.

Der Transformator, der in jedem Modul vorhanden ist, hat die Funktion einer galvanischen Trennung, wie es beim Betrieb an Wechselspannungsnetzen gefordert ist. Neben den genannten Bauteilen, die in einem Modul eingesetzt werden, kann das Modul weitere Bauteile enthalten, insbesondere Kapazitäten und/oder Induktivitäten. Insbesondere können ein oder mehrere Kondensatoren zwischen die beiden Gleichspannungspotentiale auf der Gleichspannungsseite des ersten Gleichrichters geschaltet sein. Dies glättet die Gleichspannung und kann beim Betrieb als aktiver Filter zur Speicherung von Energie genutzt werden, die kurzzeitig für die Erzeugung des Kompensations-Wechselstroms an der Wechselspannungsseite der ersten Gleichrichter benötigt wird. Ferner kann zumindest in einem Teil der Verbindungsleitungen zwischen dem Wechselrichter eines Moduls und dem Transformator sowie zwischen dem zweiten Gleichrichter und dem Transformator jeweils eine Kapazität (z. B. ein oder mehrere Kondensatoren) vorgesehen sein. Diese Kapazitäten können so auf die anderen elektrischen Eigenschaften des Wechselspannungsteils des Moduls abgestimmt werden und die Gleichrichter und Wechselrichter können so betrieben werden, dass die Frequenz der Wechselspannung am Transformator eine Resonanzfrequenz des Wechselspannungsteils ist. Dadurch werden die Übertragungsverluste der Energieübertragung über den Transformator verringert. Auch können bei Resonanz Wechselrichter und Gleichrichter besonders effektiv, d. h. geringen Schaltverlusten betrieben werden.

Das erwähnte zulässige Maß, auf das der Störstrom reduziert wird, ist durch die jeweils für ein Versorgungsnetz und den Betrieb von Schienenfahrzeug an dem Versorgungsnetz gültigen Vorschriften gegeben. Insbesondere können Grenzwerte für Stromamplituden vorgegeben sein, wobei die Grenzwerte frequenzabhängig sind oder auf eine bestimmte Frequenz bezogen sein können. Dabei ist es auch möglich, dass erst durch die Kombinationswirkung des zweiten Filters und des aktiven Filters das zulässige Maß eingehalten, d. h. der Grenzwert nicht überschritten wird.

Beim Betrieb an Wechselspannungsnetzen ist es üblich, einen zwischen Gleichspannungsleitungen der Energieversorgungsanordnung geschalteten so genannten Saugkreis mit einer Induktivität und einer in Reihe geschalteten Kapazität vorzusehen. Der Saugkreis kann sich im Bereich des Gleichspannungszwischenkreises befinden oder im Gleichspannungsteil eines oder mehrerer Module der Gleichrichteranordnung. Im Betrieb an einem Gleichspannungsnetz kann die Induktivität als zweiter Filter (oder Teil des zweiten Filters) in der elektrischen Verbindung zwischen Gleichspannungszwischenkreis genutzt werden. Auch die Kapazität kann z. B. als Glättungskondensator oder Energiespeicher für den aktiven Filter genutzt werden. Um die Bauteile für die unterschiedlichen Zwecke nutzen zu können, können entsprechende Schalter vorgesehen sein, die beim Wechsel zwischen dem Betrieb an einem Wechselspannungsnetz auf einen Betrieb an einem Gleichspannungsnetz oder umgekehrt umgeschaltet werden.

Ausführungsbeispiele der Erfindung werden nun unter Bezugnahme auf die beigefügte Zeichnung beschrieben. Die einzelnen Figuren der Zeichnung zeigen:
- Fig. 1: das elektrische Schaltungsdiagramm einer Energieversorgungsanordnung für ein Schienenfahrzeug, wobei die Anordnung an ein Energieversorgungsnetz und an einen Gleichspannungszwischenkreis mit einem daran angeschlossenen Traktionsstromrichter angeschlossen ist,
- Fig. 2: Details des elektrischen Schaltungsdiagramms eines Moduls, das Teil der in Fig. 1 dargestellten Energieversorgungsanordnung ist, und
- Fig. 3: eine Regelstruktur zum Regeln der netzseitigen Gleichrichter der Module der Energieversorgungsanordnung gemäß Fig. 1 während des Betriebes am Gleichspannungsnetz.

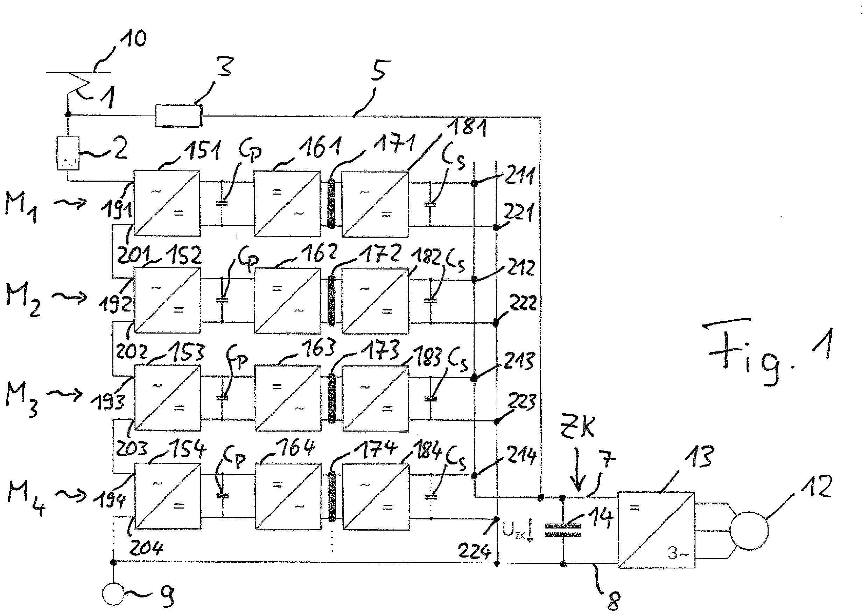

Die in Fig. 1 dargestellte Energieversorgungsanordnung ist über einen Stromabnehmer 1 an ein elektrisches Energieversorgungsnetz 10 angeschlossen. Dabei kann das Energieversorgungsnetz ein Gleichspannungsnetz oder ein Wechselspannungsnetz sein. Für den Betrieb an einem Gleichspannungsnetz ist der Stromabnehmer 1 über eine Induktivität 3 und eine elektrische Verbindung 5 mit einem ersten Potential 7 eines Gleichspannungszwischenkreises ZK verbunden. Das andere Potential 8 des Gleichspannungszwischenkreises ZK ist über zumindest ein Rad 9 des Schienenfahrzeugs mit der in Fig. 1 nicht dargestellten Fahrschiene elektrisch verbunden. Zwischen die Potentiale 7, 8 des Gleichspannungszwischenkreises ZK ist eine Kapazität 14 geschaltet. Sie dient der Glättung von Spannungsschwankungen und als temporärer Energiespeicher. Weitere mögliche Bestandteile der Schaltungsanordnung, wie z.B. ein Saugkreis mit einer in Reihe geschalteten Kapazität und einer Induktivität zwischen den Potentialen 7, 8 ist in Fig. 1 nicht dargestellt.

An den Gleichspannungszwischenkreis ZK ist ein Traktionswechselrichter 13 angeschlossen, der die Gleichspannung umrichtet und einen Fahrmotor 12 mit elektrischer Energie versorgt. Alternativ können mehrere Traktionswechselrichter an denselben Gleichspannungszwischenkreis angeschlossen sein und/oder ein Traktionswechselrichter mehr als einen Fahrmotor mit Energie versorgen.

Für den Betrieb an einem Wechselspannungsnetz ist der Stromabnehmer 1 über eine Filter-Induktivität 2 mit einem ersten elektrischen Anschluss 191 eines Moduls M₁ verbunden. Über einen zweiten elektrischen Anschluss 201 ist das Modul M₁ mit einem ersten elektrischen Anschluss 192 eines zweien Moduls M₂ verbunden. Ein zweiter elektrischer Anschluss 202 des zweiten Moduls M₂ ist mit einem ersten elektrischen Anschluss 193 eines dritten Moduls M₃ verbunden. Ein zweiter elektrischer Anschluss 203 des dritten Moduls M₃ ist mit einem ersten elektrischen Anschluss 194 eines vierten Moduls M₄ verbunden. Ein zweiter elektrischer Anschluss 204 des vierten Moduls M₄ ist über weitere, nicht in Fig. 1 dargestellte Module und über zumindest das Rad 9 mit der Fahrschiene verbunden. In verschiedenen Ausführungsformen einer solchen Schaltungsanordnung kann die Anzahl der Module M variieren. Ferner können in derselben Schaltungsanordnung Module bei Bedarf hinzu oder abgeschaltet werden. Ein abgeschaltetes Modul ist nicht mehr Teil der Reihenschaltung von dem Stromabnehmer über die Induktivität 2, jeweils den ersten elektrischen Anschluss 19 sowie den zweiten elektrischen Anschluss 20 der Module M und das Rad 9 zur Fahrschiene. Ein zugeschaltetes Modul ist jedoch Teil dieser Reihenschaltung.

Jedes Modul M weist einen ersten Gleichrichter 151, 152, 153, 154 auf, der mit dem ersten elektrischen Anschluss 191, 192, 193, 194 und dem zweiten elektrischen Anschluss 201, 202, 203, 204 verbunden ist.

Die einander entsprechenden Bauteile und Anschlüsse der Module, die mit Bezugsziffern bezeichnet sind, sind mit Ausnahme der letzten Ziffer des jeweiligen Bezugszeichens mit denselben Ziffern bezeichnet. In der letzten Ziffer der Bezugszeichen steht die Nummer des Moduls. Im Folgenden wird auf die Angabe der letzten Ziffer verzichtet, da die Module gleich aufgebaut sind.

An der Gleichspannungsseite des ersten Gleichrichters 15 befinden sich zwei Gleichspannungsleitungen auf unterschiedlichem Potential, zwischen denen eine Kapazität C_{P} geschaltet ist und an die die Gleichspannungsseite eines Wechselrichters 16 angeschlossen ist. Die Wechselspannungsseite des Wechselrichters 16 ist über einen Transformator 17 mit der Wechselspannungsseite eines zweiten Gleichrichters 18 verbunden. Die Gleichspannungsseite des zweiten Gleichrichters 18 ist über zwei Gleichspannungsleitungen mit einem dritten elektrischen Anschluss 21 bzw. einem vierten elektrischen Anschluss 22 des Moduls M verbunden. Zwischen diese Gleichspannungsleitungen ist eine Kapazität C_{S} geschaltet. Die dritten elektrischen Anschlüsse 21 der Module M sind unmittelbar mit dem ersten Potential 7 des Gleichspannungszwischenkreises ZK verbunden. Die vierten elektrischen Anschlusse der Module M sind unmittelbar mit dem zweiten elektrischen Potential 8 des Gleichspannungszwischenkreises verbunden. Zwischen den Potentialen 7, 8 des Gleichspannungszwischenkreises besteht die elektrische Spannung U_{ZK}.

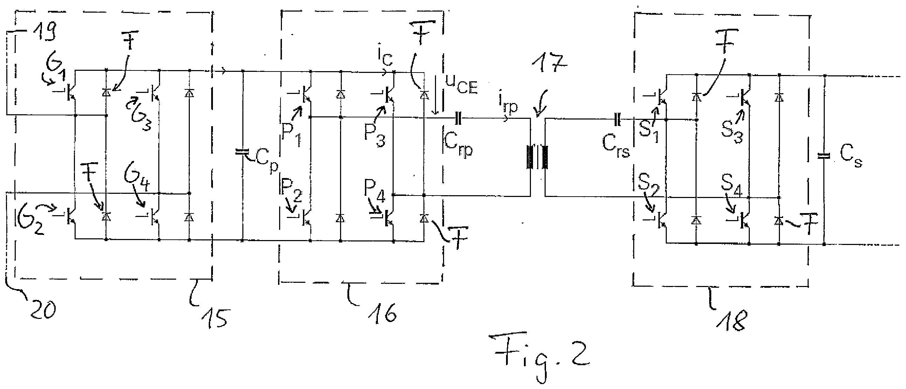

Ein Ausführungsbeispiel für den detaillierten elektrischen Aufbau eines der Module M ist in Fig. 2 dargestellt. Der erste Gleichrichter 15, der auf seiner Wechselspannungsseite mit dem ersten Anschluss 19 und dem zweiten Anschluss 20 verbunden ist, weist zwei Zweige auf, in denen jeweils zwei Halbleiterschalter G₁₅ G₂; G₃, G₄ in Reihe geschaltet sind. Der erste elektrische Anschluss 19 ist mit einem Anschlusspunkt zwischen den zwei Halbleiterschaltern des ersten Zweiges verbunden. Der zweite elektrische Anschluss 20 ist mit einem Anschlusspunkt zwischen den zwei Halbleiterschaltern des zweiten Zweiges verbunden. Parallel zu jedem Halbleiterschalter ist eine Freilaufdiode F geschaltet, wobei nicht alle der in Fig. 2 dargestellten Dioden explizit mit dem Bezugszeichen F bezeichnet sind. Die Enden der beiden parallel geschalteten Zweige mit den Halbleiterschaltern G sind an die elektrischen Anschlüsse der Gleichspannungsseite des Gleichrichters 15 angeschlossen, zwischen die die Kapazität C_{P} geschaltet ist. Der Gleichrichter 15 wird als Vierquadrantensteller betrieben, wenn die Energieversorgungsanordnung und damit das Schienenfahrzeug an einem Wechselspannungsnetz betrieben werden. Wenn dagegen die Anordnung an einem Gleichspannungsnetz betrieben wird, wird der Gleichrichter 15 als Wechselrichter betrieben. In diesem Fall ist der Gleichrichter 15 ein aktiver Filter oder Teil eines aktiven Filters, d.h. es werden von dem Gleichrichter oder den Gleichrichtern 15 Wechselspannungen erzeugt, die einen über die Induktivität 2 fließenden Wechselstrom zur Folge haben, welcher über die Filter-Induktivität 3 fließende Störströme ganz oder teilweise kompensiert.

Der Wechselrichter 16 ist wie der Gleichrichter 15 aufgebaut, wobei die Gleichspannungsseiten des Gleichrichters 15 und des Wechselrichters 16 miteinander verbunden sind. Die Halbleiterschalter des Wechselrichters 16 sind mit den Bezugszeichen P₁, P₂, P₃, P₄ bezeichnet. Die Wechselspannungsseite des Wechselrichters 16 ist über eine Kapazität Cᵣₚ mit der Primärseite eines Transformators 17 verbunden. Die Sekundärseite des Transformators 17 ist über eine Kapazität C_{RS} mit dem zweiten Gleichrichter 18 verbunden, der wie der erste Gleichrichter 15 aufgebaut ist. Seine Halbleiterschalter sind mit den Bezugszeichen S₁, S₂, S₃, S₄ bezeichnet. An der Gleichspannungsseite des zweiten Gleichrichters 18 befindet sich die Kapazität C_{S}.

Beim Betrieb an einem Wechselspannungsnetz wird die zwischen dem ersten 19 und dem zweiten 20 elektrischen Anschluss abfallende Wechselspannung von dem Gleichrichter 15 gleichgerichtet, dem Wechselrichter 16 zugeführt, der die Gleichspannung zu einer Wechselspannung im Mittelfrequenzbereich umrichtet und der Primärseite des Transformators 17 zuführt. Der Transformator 17 wird vorzugsweise mit einem Übersetzungsverhältnis von 1 : 1 betrieben, d.h. die Spannung wird nicht verändert. Alternativ kann der Transformator 17 jedoch auch ein anderes Übersetzungsverhältnis aufweisen. Auf der Sekundärseite des Transformators 17 wird die Wechselspannung dem zweiten Gleichrichter 18 zugeführt, der die Wechselspannung zu der Gleichspannung gleichrichtet, die dem Gleichspannungszwischenkreis ZK zugeführt wird. Dadurch, dass die Module M an ihrer Netzseite in Reihe geschaltet sind, aber auf ihrer Gleichspannungszwischenkreisseite parallel geschaltet sind, kann eine sehr hohe Wechselspannung von z.B. 15 kV in eine Gleichspannung am Gleichspannungszwischenkreis im Bereich von 1 kV bis 3 kV umgewandelt werden, ohne die maximal zulässige Betriebsspannung der Halbleiterschalter zu überschreiten.

Wenn die Energieversorgungsanordnung gemäß Fig. 1 an einem Gleichspannungsnetz betrieben wird, wird die für den Zwischenkreis ZK benötigte Energie über die elektrische Verbindung 5 übertragen. Beim Betrieb des Traktionswechselrichters 13 entstehen jedoch unerwünschte Störsignale, die zu entsprechenden Störströmen (Wechselströmen) führen, welche über die Induktivität 3 in das Netz 10 fließen. Um zumindest einen Teil dieser Störströme zu kompensieren, werden die ersten Gleichrichter 15 der Module M zumindest teilweise als Wechselrichter betrieben. Über den zweiten Gleichrichter 18, den Transformator 17 und den Wechselrichter 16 kann der Kondensator CP auf der Gleichspannungsseite des ersten Gleichrichters 15 aufgeladen werden. Somit steht dem ersten Gleichrichter 15 Energie für die Erzeugung geeigneter Wechselströme zur Kompensation der Störströme zur Verfügung. Bei andauerndem Betrieb wird allenfalls eine sehr geringe zusätzliche Aufladung des Kondensators CP aus dem Gleichspannungszwischenkreis ZK benötigt, da es sich bei den Kompensationsströmen um Wechselströme handelt, so dass auch wieder Energie zurück in den Kondensator CP fließt.

Die nicht in Fig. 1 und Fig. 2 dargestellte Steuerung der Halbleiterschalter G der ersten Gleichrichter 15 steuert diese Halbleiterschalter G so an, dass die jeweils momentan geeignete Spannung über die Induktivität 2 abfällt. Diese Spannung wird durch das Schalten der Halbleiterschalter G zu einer Wechselspannung, die den zur Kompensation der Störströme geeigneten Kondensationsstrom bewirkt. Im Ergebnis kompensieren sich die Störströme und die Kompensationsströme zumindest teilweise, so dass über den Stromabnehmer 1 bei erfolgreicher Kompensation kein oder nur ein geringer zulässiger Wechselstrom ins Netz fließt.

Um die Halbleiterschalter der Gleichrichter 15 in geeigneter Weise ansteuern zu können, wird der Störstrom durch die elektrische Leitung 5 vorzugsweise gemessen. Alternativ oder zusätzlich können verschiedene Spannungen, insbesondere die Zwischenkreisspannung U_{ZK} und die Spannung zwischen Stromabnehmer 1 und Rad 9, gemessen werden. Wenn lediglich derartige Spannungen gemessen werden, kann der Störstrom z.B. unter Verwendung eines physikalischen Modells der elektrischen Energieversorgungsanordnung oder von Teilen davon berechnet werden. Es ist auch möglich, nicht den Störstrom zu messen, sondern unmittelbar die Spannung zwischen Stromabnehmer und Fahrschiene bzw. Rad 9 und diese Spannung durch Betreiben der Gleichrichter 15 möglichst frei von Wechselspannungsanteilen zu halten. Im Ergebnis fließen dann ebenfalls keine oder allenfalls geringe zulässige Störströme ins Netz 10.

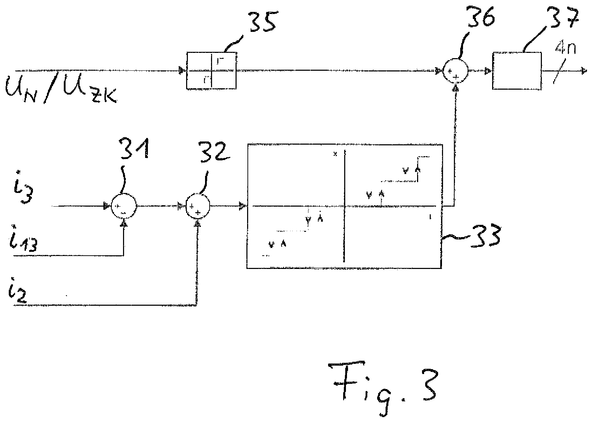

Fig. 3 zeigt eine mögliche Regelstruktur für den aktiven Filter, d.h. für das Betreiben der netzseitigen ersten Gleichrichter der Energieversorgungsanordnung als Wechselrichter. Eine Eingangsgröße der Regelstruktur ist der Strom i₃, der über die Induktivität 3 in der elektrischen Leitung 5 (siehe Fig. 1) fließt. Eine weitere Eingangsgröße der Regelstruktur ist der Strom i₁₃ durch den Traktionsstromrichter 13, d.h. zwischen den Potentialen 7, 8 des Gleichspannungszwischenkreises ZK. Der Strom i₃ und der Strom i₁₃ werden in der Subtraktionseinrichtung 31 voneinander subtrahiert und ergeben den Strom, der durch den aktiven Filter erzeugt werden soll. Dieser Strom ist gleich dem Strom durch die Induktivität 2. Der momentan durch die Induktivität 2 fließende Strom i₂ wird einem Summierer 32 zugeführt, der ebenfalls die Differenz zwischen den Strömen i₃ und i₁₃ erhält. Am Ausgang des Summierers 32 steht daher der zusätzlich von dem aktiven Filter aufzubringende Strom als Eingangsinformation für die Regeleinrichtung 33 zur Verfügung. Die Regeleinrichtung 33 berechnet daraus die Anzahl der einzuschaltenden oder auszuschaltenden Gleichrichter 15 der Module M. Um die Berechnung der zu schaltenden Gleichrichter zu ermöglichen, steht der Regeleinrichtung 33 Zusatzinformation zur Verfügung, z. B. über die an der Gleichspannungsseite der Gleichrichter 15 herrschenden Spannungen.

Am Ausgang der Regeleinrichtung 33 steht nun die Information über die Anzahl der einzuschaltenden oder auszuschaltenden Gleichrichter zur Verfügung. Sie wird in einer optionalen Ausgestaltung einem Summierer 36 zugeführt, der ebenfalls ein Ausgangssignal einer zweiten Regeleinrichtung 35 als zweite Eingangsgröße erhält und diese beiden Eingangssignale addiert. Die zweite Regeleinrichtung 35 erhält als Eingangssignal das Verhältnis der Netzspannung, d.h. der Spannung zwischen dem Energieversorgungsnetz 10 und dem Rad 9 oder der Fahrschiene, und der Zwischenkreisspannung U_{ZK}. Aus diesem Verhältnis berechnet die zweite Regeleinrichtung 35 vorab, d.h. ohne Kenntnis der momentan fließenden Störströme, die Anzahl der momentan benötigten eingeschalteten ersten Gleichrichter 15 der Module M. Dem liegt der Gedanke zugrunde, dass die Netzspannung U_{N} durch den Betrieb von Schienenfahrzeugen stark schwanken kann.

Am Ausgang des Summierers 36 liegt nun die Anzahl der momentan einzuschaltenden bzw. auszuschaltenden Gleichrichter 15 an. Einzuschalten bedeutet, dass die an dem Kondensator CP an der Gleichspannungsseite des Gleichrichters 15 anliegende Spannung auf die Wechselspannungsseite geschaltet wird. Selbstverständlich ist es auch möglich, diese Spannung umgekehrt, d.h. mit umgekehrtem Vorzeichen, auf die Wechselspannungsseite zu schalten. Auch ist es möglich, den Gleichrichter auf die Spannung Null zu schalten, d.h. er trägt nicht zu der Summenspannung der in Reihe geschalteten ersten Gleichrichter 15 bei. Die zweite Regeleinrichtung 35 gibt das Verhältnis der Spannung U_{N} und der Zwischenkreisspannung U_{ZK} diskretisiert, d.h. gerundet auf ganzzahlige positive Zahlenwerte, aus. Z.B. entspricht der Zahlenwert 1 einem Verhältnis der Spannungen bis zu 1,5. Normalerweise ist das Verhältnis der Spannungen etwa 1, da der Zwischenkreis ZK und das Netz 10 über eine verhältnismäßig kleine Induktivität 3 miteinander verbunden sind. Die Netzspannung kann jedoch kurzfristig einbrechen oder es können hohe Spannungsspitzen auftreten. In diesem Fall gibt die zweite Regeleinrichtung 35 einen anderen ganzzahligen Wert aus. Die zweite Regeleinrichtung 35 reagiert damit auf externe Einflüsse und führt dazu, dass die erste Regeleinrichtung 33 im Wesentlichen nur auf Störströme reagiert, die beim Betrieb des Traktionswechselrichters 13 auftreten.

Die Steuereinrichtung 37 erhält diese Anzahl der einzuschaltenden oder auszuschaltenden Gleichrichter. Alternativ kann sie, bei einer anderen Ausgestaltung der Regelstruktur, die gewünschte Veränderung der Spannung als Eingangsgröße erhalten, die über die Reihenschaltung der Gleichrichter 15 auf ihrer Wechselspannungsseite abfällt. Es sind weitere äquivalente Größen als Eingangsgröße für die Steuereinrichtung 37 möglich. Die Steuereinrichtung 37 ermittelt nun die Halbleiterschalter der Gleichrichter 15, die geschaltet werden sollen. Im Allgemeinen gibt es dazu mehrere Möglichkeiten. Vorzugsweise schaltet die Steuereinrichtung diejenigen Halbleiterschalter, die die geringstmögliche thermische Belastung aller Gleichrichter 15 bewirken. Bei der geringstmöglichen thermischen Belastung haben alle Gleichrichter etwa dieselbe thermische Belastung. Alternativ kann die Steuereinrichtung 37 die Halbleiterschalter so auswählen, dass für jeden Gleichrichter eine vorgegebene thermische Belastung nicht überschritten wird.

Möglichkeiten, wie die Steuereinrichtung die Halbleiterschalter oder die entsprechenden Gleichrichter auswählt, wurden bereits oben beschrieben. Allgemein formuliert wählt die Steuereinrichtung 37 die zu schaltenden Halbleiterschalter oder die anzusteuernden Gleichrichter, deren Halbleiterschalter geschaltet werden sollen, abhängig davon aus, wie hoch die Temperatur des Gleichrichters oder zumindest eines der Halbleiterschalter ist, oder danach aus, in welcher Schaltreihenfolge die Gleichrichter oder Halbleiterschalter zuvor geschaltet wurden. In letztgenanntem Fall werden Halbleiterschalter oder Gleichrichter bevorzugt geschaltet, die länger als andere Halbleiterschalter oder Gleichrichter nicht mehr geschaltet wurden.

Um zu verhindern, dass der Regler an seinem Ausgang eine hochfrequente Schwingung erzeugt (Jitter), können Schalt-Hysteresen vorgesehen werden, d.h. der Schwellwert, um die Anzahl der eingeschalteten Module M bzw. Gleichrichter 15 zu erhöhen, unterscheidet sich von dem Schwellwert, der erreicht oder überschritten werden muss, um die Anzahl der eingeschalteten Gleichrichter zu verringern. Z.B. beträgt der Schwellwert 1,6 für die Erhöhung der Anzahl von 1 auf 2, während der Schwellwert für die Erniedrigung von 2 auf 1 bei 1,5 liegt.

## Patentansprüche

1. Elektrische Energieversorgungsanordnung für Antriebseinrichtungen von Schienenfahrzeugen, wobei die Energieversorgungsanordnung aufweist:
• einen ersten elektrischen Anschluss (10) zum Anschließen der Anordnung an ein elektrisches Energieversorgungsnetz,
• einen zweiten elektrischen Anschluss (21, 22) zum Anschließen der Anordnung an einen Gleichspannungszwischenkreis (ZK), an den wiederum zumindest ein Traktionswechselrichter (13) zum Betreiben zumindest eines Fahrmotors (12) anschließbar ist,
• eine Gleichrichteranordnung (M₁, M₂, M₃, M₄) zum Betrieb des Schienenfahrzeugs an einem Wechselspannungsnetz, wobei die Gleichrichteranordnung (M₁, M₂, M₃, M₄) über einen ersten Filter (2) mit dem ersten elektrischen Anschluss (1) verbunden ist und zumindest ein Modul (M) aufweist, in dem ein erster Gleichrichter (15) über einen Wechselrichter (16) und einen Transformator (17) mit einem zweiten Gleichrichter (18) verbunden ist, wobei der erste Gleichrichter (15) an seiner Wechselspannungsseite über den ersten Filter (2) mit dem ersten elektrischen Anschluss (1) verbunden ist, wobei der zweite Gleichrichter (18) an seiner Gleichspannungsseite mit dem zweiten elektrischen Anschluss (21, 22) verbunden ist und wobei im Fall von mehreren der Module (M) die Wechselspannungsanschlüsse (19, 20) der ersten Gleichrichter (15) in Serie geschaltet sind, aber die Gleichspannungsanschlüsse (21, 22) der zweiten Gleichrichter parallel geschaltet sind,
**gekennzeichnet durch**
• eine elektrische Verbindung (5) zum Betrieb des Schienenfahrzeugs an einem Gleichspannungsnetz, wobei die elektrische Verbindung (5) einen zweiten Filter (3) aufweist und wobei die elektrische Verbindung (5) den ersten elektrischen Anschluss (1) mit dem zweiten elektrischen Anschluss (21) verbindet,
• eine Steuereinrichtung (37) zum Steuern des Betriebes des ersten Gleichrichters (15) oder der ersten Gleichrichter (15), während das Schienenfahrzeug an einem Gleichspannungsnetz betrieben wird, wobei die Steuereinrichtung (37) ausgestaltet ist, durch Steuern von Schaltzeitpunkten von Halbleiterschaltern (G) des ersten Gleichrichters (15) oder der ersten Gleichrichter (15) an dem ersten elektrischen Anschluss (1) eine Wechselspannung zu erzeugen, die einen elektrischen Wechselstrom, der ein Störstrom ist, der aufgrund des Betriebes der Antriebseinrichtung des Schienenfahrzeugs von dem Gleichspannungszwischenkreis (ZK) durch die elektrische Verbindung (5) fließt, kompensiert oder auf ein zulässiges Maß reduziert,
wobei die Gleichrichteranordnung eine Mehrzahl der Module (M) aufweist und wobei die Steuereinrichtung (37) ausgestaltet ist, für die Veränderung einer Spannung, die zur Kompensation oder Reduzierung des Störstromes erforderlich ist, einen der ersten Gleichrichter (15) auszuwählen und zumindest einen Halbleiterschalter (G) des ausgewählten Gleichrichters (15) zu schalten, wobei die Auswahl abhängig von einer thermischen Belastung der ersten Gleichrichter (15) aufgrund von Schaltverlusten getroffen wird.

2. Energieversorgungsanordnung nach Anspruch 1, wobei für die Veränderung der Spannung ein erster Gleichrichter (15) ausgewählt wird, dessen Halbleiterschalter (G) bei unmittelbar vorhergehenden Schaltvorgängen nicht geschaltet wurden.

3. Verfahren zum Betreiben einer Antriebseinrichtung eines Schienenfahrzeugs, wobei:
• beim Betrieb des Schienenfahrzeugs an einem Wechselspannungsnetz Energie aus dem Wechselspannungsnetz über eine Gleichrichteranordnung (M₁, M₂, M₃, M₄) in einen Gleichspannungszwischenkreis (ZK) gespeist wird, an den zumindest ein Traktionswechselrichter (13) zum Betreiben zumindest eines Fahrmotors (12) angeschlossen ist, wobei die Energie aus dem Wechselspannungsnetz über einen ersten Filter (2) in die Gleichrichteranordnung (M₁, M₂, M₃, M₄) eingebracht wird und über zumindest ein Modul (M) der Gleichrichteranordnung (M₁, M₂, M₃, M₄) zu dem Gleichspannungszwischenkreis (ZK) übertragen wird, wobei die Energie in jedem Modul (M) von einem ersten Gleichrichter (15) über einen Wechselrichter (16) und einen Transformator (17) zu einem zweiten Gleichrichter (18) übertragen wird, der die Energie in den Gleichspannungszwischenkreis (ZK) einspeist, wobei im Fall von mehreren der Module (M) die Wechselspannungsanschlüsse (19, 20) der ersten Gleichrichter (15) in Serie geschaltet sind, aber die Gleichspannungsanschlüsse (21, 22) der zweiten Gleichrichter (18) parallel geschaltet sind, **dadurch gekennzeichnet, dass**
• beim Betrieb des Schienenfahrzeugs an einem Gleichspannungsnetz Energie aus dem Gleichspannungsnetz über eine elektrische Verbindung (5) in den Gleichspannungszwischenkreis (ZK) eingespeist wird, wobei die elektrische Verbindung (5) einen zweiten Filter (3) aufweist und wobei durch Steuern von Schaltzeitpunkten von Halbleiterschaltern (G) des ersten Gleichrichters (15) oder der ersten Gleichrichter (15) eine Wechselspannung erzeugt wird, die einen elektrischen Wechselstrom, der ein Störstrom ist, der aufgrund des Betriebes der Antriebseinrichtung des Schienenfahrzeugs von dem Gleichspannungszwischenkreis (ZK) durch die elektrische Verbindung (5) fließt, kompensiert oder auf ein zulässiges Maß reduziert.
• die Gleichrichteranordnung (M₁, M₂, M₃, M₄) eine Mehrzahl der Module (M) aufweist und wobei für die Veränderung einer Spannung, die zur Kompensation oder Reduzierung des Störstromes erforderlich ist, ein erster Gleichrichter (15) ausgewählt wird und zumindest ein Halbleiterschalter (G) des ausgewählten Gleichrichters (15) geschaltet wird, wobei die Auswahl abhängig von einer thermischen Belastung der ersten Gleichrichter (15) aufgrund von Schaltverlusten getroffen wird.

4. Verfahren nach Anspruch 3, wobei für die Veränderung der Spannung ein erster Gleichrichter (15) ausgewählt wird, dessen Halbleiterschalter (G) bei unmittelbar vorhergehenden Schaltvorgängen nicht geschaltet wurden.

## Claims

1. An electrical power supply arrangement for drive devices of rail vehicles, the power supply arrangement comprising:
• a first electrical terminal (10) for connecting the arrangement to an electrical power supply network;
• a second electrical terminal (21, 22) for connecting the arrangement to a DC voltage intermediate circuit (ZK), to which, in turn, at least one traction inverter (13) for operating at least one driving motor (12) can be connected;
• a rectifier arrangement (M₁, M₂, M₃, M₄) for operating the rail vehicle on an AC voltage network, the rectifier arrangement (M₁, M₂, M₃, M₄) being connected via a first filter (2) to the first electrical terminal (1) and comprising at least one module (M) in which a first rectifier (15) is connected via an inverter (16) and a transformer (17) to a second rectifier (18), the first rectifier (15) on the AC voltage side thereof being connected via the first filter (2) to the first electrical terminal (1), the second rectifier (18) on the DC voltage side thereof being connected to the second electrical terminal (21, 22), and, in the case of a plurality of the modules (M), the AC voltage terminals (19, 20) of the first rectifiers (15) being connected in series, but the DC voltage terminals (21, 22) of the second rectifiers being connected in parallel,
**characterized by**
• an electrical connection (5) for operating the rail vehicle on a DC voltage network, the electrical connection (5) comprising a second filter (3), and the electrical connection (5) connecting the first electrical terminal (1) to the second electrical terminal (21); and
• a control unit (37) for controlling the operation of the first rectifier (15) or of the first rectifiers (15) while the rail vehicle is being operated on a DC voltage network, the control unit (37) being configured, by controlling the switching times of semiconductor switches (G) of the first rectifier (15) or of the first rectifiers (15), to generate an AC voltage at the first electrical terminal (1) that compensates for, or reduces to a permissible level, an electrical AC current, which is a parasitic current flowing from the DC voltage intermediate circuit (ZK) through the electrical connection (5) as a result of the operation of the drive device of the rail vehicle,
the rectifier arrangement comprising a plurality of the modules (M), and the control unit (37) being configured to select one of the first rectifiers (15) and to switch at least one semiconductor switch (G) of the selected rectifier (15) for varying a voltage necessary for compensating for or reducing the parasitic current, the selection being made as a function of a thermal load of the first rectifiers (15) based on switching losses.

2. The power supply arrangement according to claim 1, wherein a first rectifier (15) whose semiconductor switches (G) were not switched during immediately preceding switching processes is selected for varying the voltage.

3. A method for operating a drive device of a rail vehicle,
• during the operation of the rail vehicle on an AC voltage network, energy being fed from the AC voltage network via a rectifier arrangement (M₁, M₂, M₃, M₄) into a DC voltage intermediate circuit (ZK) to which at least one traction inverter (13) for operating at least one driving motor (12) is connected, the energy from the AC voltage network being introduced via a first filter (2) into the rectifier arrangement (M₁, M₂, M₃, M₄) and being transferred via at least one module (M) of the rectifier arrangement (M₁, M₂, M₃, M₄) to the DC voltage intermediate circuit (ZK), the energy in each module (M) being transferred from a first rectifier (15) via an inverter (16) and a transformer (17) to a second rectifier (18) feeding the energy into the DC voltage intermediate circuit (ZK), and, in the case of a plurality of the modules (M), the AC voltage terminals (19, 20) of the first rectifiers (15) being connected in series, but the DC voltage terminals (21, 22) of the second rectifiers (18) being connected in parallel,
**characterized in that**
• during the operation of the rail vehicle on a DC voltage network, power from the DC voltage network being fed via an electrical connection (5) into the DC voltage intermediate circuit (ZK), the electrical connection (5) comprising a second filter (3), and, by controlling switching times of semiconductor switches (G) of the first rectifier (15) or of the first rectifiers (15), an AC voltage being generated which compensates for, or reduces to a permissible level, an electrical AC current, which is a parasitic current flowing from the DC voltage intermediate circuit (ZK) through the electrical connection (5) as a result of the operation of the drive device of the rail vehicle, and
• the rectifier arrangement (M₁, M₂, M₃, M₄) comprises a plurality of the modules (M), a first rectifier (15) being selected and at least one semiconductor switch (G) of the selected rectifier (15) being switched for varying a voltage necessary for compensating for or reducing the parasitic current, the selection being made as a function of a thermal load of the first rectifiers (15) based on switching losses.

4. The method according to claim 3, wherein a first rectifier (15) whose semiconductor switches (G) were not switched during immediately preceding switching processes is selected for varying the voltage.

## Revendications

1. Système d'alimentation en énergie électrique destiné à des dispositifs d'entraînement de véhicules ferroviaires, dans lequel le système d'alimentation en énergie présente :
- un premier raccord électrique (10) pour le raccordement du système à un réseau d'alimentation en énergie électrique ;
- un deuxième raccord (21, 22) électrique pour le raccordement du système à un circuit intermédiaire à tension continue (ZK), auquel à son tour au moins un onduleur de traction (13) peut être raccordé pour le fonctionnement d'au moins un moteur de traction (12),
- un système redresseur (M₁, M₂, M₃, M₄) pour le fonctionnement du véhicule ferroviaire sur un réseau de tension alternative, dans lequel le système redresseur (M₁, M₂, M₃, M₄) est relié au premier raccord électrique (1) par le biais d'un premier filtre (2) et présente au moins un module (M), dans lequel un premier redresseur (15) est relié à un deuxième redresseur (18) par le biais d'un onduleur (16) et d'un transformateur (17), dans lequel le premier redresseur (15) est relié au niveau de son côté tension alternative au premier raccord électrique (1) par le biais du premier filtre (2), dans lequel le deuxième redresseur (18) est relié au niveau de son côté tension continue au deuxième raccord (21, 22) électrique et dans lequel dans le cas de plusieurs des modules (M), les raccords de tension alternative (19, 20) des premiers redresseurs (15) sont montés en série, mais les raccords (21, 22) de tension continue des deuxièmes redresseurs sont montés en parallèle,
**caractérisé par**
- une liaison électrique (5) pour le fonctionnement du véhicule ferroviaire sur un réseau de tension continue, dans lequel la liaison électrique (5) présente un deuxième filtre (3) et dans lequel la liaison électrique (5) relie le premier raccord électrique (1) au deuxième raccord (21) électrique,
- un dispositif de commande (37) pour la commande du fonctionnement du premier redresseur (15) ou des premiers redresseurs (15), pendant que le véhicule ferroviaire fonctionne sur un réseau de tension continue, dans lequel le dispositif de commande (37) est conçu pour générer une tension alternative par commande de moments de commutation de commutateurs à semi-conducteurs (G) du premier redresseur (15) ou des premiers redresseurs (15) au niveau du premier raccord électrique (1), qui compense un courant alternatif électrique, qui est un courant parasite, qui circule en raison du fonctionnement du dispositif d'entraînement du véhicule ferroviaire du circuit intermédiaire à tension continue (ZK) par la liaison électrique (5), ou le réduit à une valeur admissible,
dans lequel le système redresseur présente une pluralité des modules (M) et dans lequel le dispositif de commande (37) est conçu pour sélectionner un des premiers redresseurs (15) pour la modification d'une tension, qui est nécessaire à la compensation ou à la réduction du courant parasite, et pour commuter au moins un commutateur à semi-conducteur (G) du redresseur (15) sélectionné, dans lequel la sélection se fait en fonction d'une sollicitation thermique des premiers redresseurs (15) en raison de pertes de commutation.

2. Système d'alimentation en énergie selon la revendication 1, dans lequel un premier redresseur (15), dont les commutateurs à semi-conducteurs (G) n'ont pas été commutés lors d'opérations de commutation immédiatement précédentes, est sélectionné pour la modification de la tension.

3. Procédé de fonctionnement d'un dispositif d'entraînement d'un véhicule ferroviaire, dans lequel :
- lors du fonctionnement du véhicule ferroviaire sur un réseau de tension alternative, de l'énergie du réseau de tension alternative est injectée par le biais d'un système redresseur (M₁, M₂, M₃, M₄) dans un circuit intermédiaire à tension continue (ZK), au niveau duquel au moins un onduleur de traction (13) est raccordé pour le fonctionnement d'au moins un moteur de traction (12), dans lequel l'énergie du réseau de tension alternative est introduite par le biais d'un premier filtre (2) dans le système redresseur (M₁, M₂, M₃, M₄) et est transmise au circuit intermédiaire à tension continue (ZK) par le biais d'au moins un module (M) du système redresseur (M₁, M₂, M₃, M₄), dans lequel l'énergie est transmise dans chaque module (M) d'un premier redresseur (15) par le biais d'un onduleur (16) et d'un transformateur (17) à un deuxième redresseur (18), qui injecte l'énergie dans le circuit intermédiaire à tension continue (ZK), dans lequel dans le cas de plusieurs des modules (M), les raccords de tension alternative (19, 20) des premiers redresseurs (15) sont montés en série, mais les raccords (21, 22) de tension continue des deuxièmes redresseurs (18) sont montés en parallèle,
**caractérisé en ce que**
- lors du fonctionnement du véhicule ferroviaire sur un réseau de tension continue, de l'énergie du réseau de tension continue est injectée par le biais d'une liaison électrique (5) dans le circuit intermédiaire à tension continue (ZK), dans lequel la liaison électrique (5) présente un deuxième filtre (3) et dans lequel une tension alternative est générée par commande de moments de commutation de commutateurs à semi-conducteurs (G) du premier redresseur (15) ou des premiers redresseurs (15), qui compense un courant alternatif électrique, qui est un courant parasite, qui circule en raison du fonctionnement du dispositif d'entraînement du véhicule ferroviaire du circuit intermédiaire à tension continue (ZK) par la liaison électrique (5), ou le réduit à une valeur admissible,
- le système redresseur (M₁, M₂, M₃, M₄) présente une pluralité des modules (M) et dans lequel un premier redresseur (15) est sélectionné pour la modification d'une tension, qui est nécessaire à la compensation ou à la réduction du courant parasite, et au moins un commutateur à semi-conducteur (G) du redresseur (15) sélectionné est commuté, dans lequel la sélection se fait en fonction d'une sollicitation thermique des premiers redresseurs (15) en raison de pertes de commutation.

4. Procédé selon la revendication 3, dans lequel un premier redresseur (15), dont les commutateurs à semi-conducteurs (G) n'ont pas été commutés lors d'opérations de commutation immédiatement précédentes, est sélectionné pour la modification de la tension.
